(19) Europäisches Patentamt
European Patent Office
Office européen des brevets

(11) EP 3 674 463 A1

(12) EUROPEAN PATENT APPLICATION
published in accordance with Art. 153(4) EPC

(43) Date of publication:
01.07.2020 Bulletin 2020/27

(51) Int Cl.:
D04H 3/16 (2006.01)          B01D 39/16 (2006.01)
D04H 3/007 (2012.01)

(21) Application number: 18862354.0

(22) Date of filing: 26.09.2018

(86) International application number:
PCT/JP2018/035740

(87) International publication number:
WO 2019/065760 (04.04.2019 Gazette 2019/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.09.2017 JP 2017184520

(71) Applicant: Mitsui Chemicals, Inc.
Minato-ku
Tokyo 105-7122 (JP)

(72) Inventors:
• KOBAYASHI, Teruki
  Sodegaura-shi
  Chiba 299-0265 (JP)
• IIBA, Kozo
  Sodegaura-shi
  Chiba 299-0265 (JP)

(74) Representative: Hoffmann Eitle
Patent- und Rechtsanwälte PartmbB
Arabellastraße 30
81925 München (DE)

(54) MELT-BLOWN NONWOVEN FABRIC AND FILTER

(57) Provided is a melt-blown nonwoven fabric including a propylenic polymer that shows at least one peak top at a position of a molecular weight of 20,000 or higher and at least one peak top at a position of a molecular weight of less than 20,000 in a discharge curve obtained by gel permeation chromatography, and has an intrinsic viscosity [η] of from 0.50 (dl/g) to 0.75 (dl/g).

FIG.1

EP 3 674 463 A1

**Description**

Technical Field

The present disclosure relates to a melt-blown nonwoven fabric and a filter.

Background Art

As compared to general spun-bonded nonwoven fabrics, nonwoven fabrics produced by a melt-blowing method (such nonwoven fabrics are each hereinafter also referred to as "melt-blow nonwoven fabric" or "melt-blown nonwoven fabric") have superior flexibility, uniformity and denseness since the fibers constituting the nonwoven fabrics can be reduced in diameter. Accordingly, melt-blown nonwoven fabrics are, by themselves or being disposed in layers with other nonwoven fabrics and the like, used in filters such as liquid filters and air filters, hygienic materials, medical materials, agricultural covering materials, civil engineering materials, building materials, oil adsorbents, automotive materials, electronic materials, separators, clothes, packaging materials, and the like.

As the fibers constituting the nonwoven fabrics, fibers of thermoplastic resins, such as polypropylene and polyethylene, are known.

Generally, filters are used for the purpose of collecting fine particles included in liquids and gases and thereby removing the fine particles from the liquids and gases. It is known that, when the fibers of the nonwoven fabrics constituting the respective filters have a small average diameter and a large specific surface area, the filters tend to have an excellent efficiency of collecting fine particles (this efficiency is hereinafter also referred to as "collection efficiency"). It is also known that the smaller the size of the fine particles, the lower is the collection efficiency.

As nonwoven fabrics having a small average fiber diameter, for example, nonwoven fabrics that are obtained by molding a resin composition containing a polyethylene and a polyethylene wax by a melt-blowing method have been proposed (see, for example, Patent Documents 1 and 2).

Further, a nonwoven fabric layered body has been proposed, and the nonwoven fabric layered body is obtained by layering a nonwoven fabric, which is obtained by forming a resin composition containing a polyethylene and a polyethylene wax by a melt-blowing method, with a spun-bonded nonwoven fabric including composite fibers formed from a polyester and an ethylenic polymer (see, for example, Patent Document 3).

As a method of producing a nonwoven fabric having a small average fiber diameter, for example, a melt-blowing method that includes applying a high voltage to a fibrous resin has been proposed (see, for example, Patent Document 4).

Moreover, as a method of producing a melt-blow nonwoven fabric in which entanglement of fibers and adhesion of suspended fibers are suppressed, a method in which not only a gap between a die and a suction roll is set within a range where, as stretching of a molten polymer is completed, vibration of the resulting polymer fibers does not substantially occur, but also gaps between the outer peripheral surface of the suction roll and the die-side ends of suction hoods are set within a range where even broken fibers adhering to or coming into contact with the surface of the resulting melt-blow nonwoven fabric can be removed by suction, has been proposed (see, for example, Patent Document 5).

Related Art Documents

Patent Documents

Patent Document 1: International Publications No. WO 2000/22219
Patent Document 2: International Publications No. WO 2015/093451
Patent Document 3: International Publications No. WO 2012/111724
Patent Document 4: International Publications No. WO 2012/014501
Patent Document 5: International Publications No. WO 2012/102398

SUMMARY OF INVENTION

Technical Problem

According to the studies conducted by the present inventors, it was found that the nonwoven fabrics disclosed in Patent Documents 1 and 3 do not have a sufficiently small average fiber diameter and thus exhibit a poor collection efficiency. It was also found that the nonwoven fabric disclosed in Patent Document 2 has a poor collection efficiency due to a small specific surface area.

Further, it was found that the production methods disclosed in Patent Documents 4 and 5 each employ a special apparatus and have a lower production rate than an ordinary melt-blowing method.

In view of the above, an object of the invention is to provide: a nonwoven fabric which can be produced by an ordinary melt-blowing method and has an excellent collection efficiency, i.e. a small average fiber diameter and a large specific surface area; and a filter including the nonwoven fabric.

Solution to Problem

Solution to the problem is as follows.

<1> A melt-blown nonwoven fabric, including a propylenic polymer that shows at least one peak top at a position of a molecular weight of 20,000 or higher and at least one peak top at a position of a molecular weight of less than 20,000 in a discharge curve obtained by gel permeation chromatography, and that has an intrinsic viscosity [$\eta$] of from 0.50 (dl/g) to 0.75 (dl/g).

<2> The melt-blown nonwoven fabric according to <1>, in which the propylenic polymer comprises: a high-molecular-weight propylenic polymer A having a weight-average molecular weight of 20,000 or higher; and a low-molecular-weight propylenic polymer B having a weight-average molecular weight of less than 20,000.

<3> The melt-blown nonwoven fabric according to <2>, in which a content ratio of the low-molecular-weight propylenic polymer B with respect to a total mass of the propylenic polymer is from 8% by mass to 40% by mass.

<4> The melt-blown nonwoven fabric according to <2> or <3>, in which a content ratio of the high-molecular-weight propylenic polymer A with respect to the total mass of the propylenic polymer is from 60% by mass to 92% by mass.

<5> The melt-blown nonwoven fabric according to any one of <2> to <4>, in which the high-molecular-weight propylenic polymer A has a melt flow rate (MFR) of from 1,000 g/10 min to 2,500 g/10 min.

<6> The melt-blown nonwoven fabric according to any one of <1> to <5>, in which the propylenic polymer has a weight-average molecular weight of 20,000 or higher.

<7> The melt-blown nonwoven fabric according to any one of <1> to <6>, including fibers having an average fiber diameter of less than 1.1 $\mu$m.

<8> The melt-blown nonwoven fabric according to any one of <1> to <7>, having a specific surface area of from 2.0 m$^2$/g to 20.0 m$^2$/g.

<9> The melt-blown nonwoven fabric according to any one of <1> to <8>, in which a ratio of a peak fiber diameter with respect to an average fiber diameter is higher than 0.5.

<10> A nonwoven fabric layered body including at least the melt-blown nonwoven fabric according to any one of <1> to <9>.

<11> A filter including the melt-blown nonwoven fabric according to any one of <1> to <9>.

<12> The filter according to <11>, which is a filter for liquids.

Effects of Invention

According to the present invention, a nonwoven fabric which can be produced by an ordinary melt-blowing method and has an excellent collection efficiency, i.e. a small average fiber diameter and a large specific surface area; and a filter including the nonwoven fabric can be provided.

BRIEF DESCRIPTION OF DRAWINGS

FIG. 1 shows discharge curves obtained by gel permeation chromatography of the propylenic polymers used in Example 1 and Comparative Example 3.

FIG. 2 shows a discharge curve obtained by gel permeation chromatography of the melt-blow nonwoven fabric produced in Example 1.

DESCRIPTION OF EMBODIMENTS

Mode for Carrying Out the Invention

In the present disclosures, each numerical range specified using "(from) ... to ..." represents a range including the numerical values noted before and after "to" as the minimum value and the maximum value, respectively.

A melt-blown nonwoven fabric in the present discloseres includes a propylenic polymer that shows at least one peak top at a position of a molecular weight of 20,000 or higher and at least one peak top at a position of a molecular weight of less than 20,000 in a discharge curve obtained by gel permeation chromatography (hereinafter, also referred to as "GPC chart"), and that has an intrinsic viscosity [η] of from 0.50 (dl/g) to 0.75 (dl/g).

The propylenic polymer constituting the melt-blown nonwoven fabric in the present disclosures shows not only at least one peak top at a position of a molecular weight of 20,000 or higher but also at least one peak top at a position of a molecular weight of less than 20,000, and has an intrinsic viscosity [η] of from 0.50 (dl/g) to 0.75 (dl/g); therefore, when a melt-blown nonwoven fabric is produced therefrom, the melt-blown nonwoven fabric can have a small average fiber diameter and a large specific surface area. Accordingly, by producing a melt-blown nonwoven fabric using such a propylenic polymer, the particle collection efficiency is improved. In addition, an excellent production rate is attained since the use of a special apparatus is not necessary.

<Propylenic Polymer>

The melt-blown nonwoven fabric in the present disclosures includes a propylenic polymer. The term "propylenic polymer" used herein refers to a polymer having a propylene content ratio of 50% by mass or higher.

The propylenic polymer, in its discharge curve obtained by GPC, has at least one peak top at a position of a molecular weight of 20,000 or higher and at least one peak top at a position of a molecular weight of less than 20,000. Hereinafter, in a discharge curve obtained by GPC, a peak top appearing at a position of a molecular weight of 20,000 or higher and a peak top appearing at a position of a molecular weight of less than 20,000 are referred to as "high molecular weight-side peak top" and "low molecular weight-side peak top", respectively.

As for the number of high molecular weight-side peak tops and that of low molecular weight-side peak tops, only the peak tops derived from the propylenic polymer may be counted.

At least one high molecular weight-side peak top is positioned at a molecular weight of 20,000 or higher, preferably 30,000 or higher, more preferably 40,000 or higher.

At least one high molecular weight-side peak top is positioned in a molecular weight range of preferably from 20,000 to 80,000, more preferably from 30,000 to 70,000, and still more preferably from 40,000 to 65,000. In a case in which at least one high molecular weight-side peak top is within this range, the average fiber diameter tends to be small, which is preferred.

At least one low molecular weight-side peak top is positioned at a molecular weight of less than 20,000, preferably 15,000 or less, more preferably 14,000 or less, and still more preferably 13,000 or less.

At least one low molecular weight-side peak top is positioned in a molecular weight range of preferably from 400 to less than 20,000, more preferably from 400 to 15,000, still more preferably from 1,000 to 14,000, yet still more preferably from 2,000 to 13,000, and particularly preferably from 6,000 to 13,000. In a case in which at least one low molecular weight-side peak top is within this range, fiber breakage during spinning is unlikely to occur, so that the average fiber diameter can be reduced while maintaining a high spinnability, which is preferred.

The propylenic polymer has a weight-average molecular weight (Mw) of preferably 20,000 or higher, more preferably 30,000 or higher, and still more preferably 35,000 or higher. Meanwhile, the Mw of the propylenic polymer is preferably 100,000 or less, more preferably 80,000 or less, and still more preferably 60,000 or less. In a case in which the Mw is not higher than the above-described upper limit value, the average fiber diameter tends to be small, while in a case in which the Mw is not less than the above-described lower limit value, fiber breakage during spinning is unlikely to occur and a high spinnability is attained, both of which cases are preferred.

In the disclosure, the "discharge curve" of the propylenic polymer obtained by gel permeation chromatography (GPC) refers to a discharge curve that is measured by a GPC method using the following apparatus under the following conditions. Further, in the disclosure, the "weight-average molecular weight (Mw)" of the propylenic polymer refers to a weight-average molecular weight in terms of polystyrene, which is measured by a gel permeation chromatography method using the following apparatus under the following conditions.

[GPC Measuring Apparatus]

| | |
|---|---|
| Column: | TOSO GMHHR-H (S) HT |
| Detector: | RI detector for liquid chromatogram, WATERS 150C |

[Measurement Conditions]

| Solvent: | 1,2,4-trichlorobenzene |
| Measurement temperature: | 145°C |
| Flow rate: | 1.0mL/min |
| Sample concentration: | 2.2 mg/mL |
| Injected amount: | 160 $\mu$L |
| Calibration curve: | Universal Calibration |
| Analysis program: | HT-GPC (Ver. 1.0) |

In a case in which thermal decomposition of the propylenic polymer does not take place during spinning, the results of GPC measurement prior to the spinning can be adopted as the results of GPC measurement of the resulting nonwoven fabric.

The propylenic polymer has an intrinsic viscosity [$\eta$] of from 0.50 (dl/g) to 0.75 (dl/g). In a case in which the intrinsic viscosity [$\eta$] is less than 0.50 (dl/g), a defect in spinning such as fiber breakage is likely to occur. Meanwhile, in a case in which the intrinsic viscosity [$\eta$] is higher than 0.75 (dl/g), the average fiber diameter is increased and the specific surface area is reduced, resulting in a poor collection efficiency.

From the standpoints of the inhibition of a defect in spinning as well as the average fiber diameter and the specific surface area, the intrinsic viscosity [$\eta$] of the propylenic polymer is preferably from 0.52 (dl/g) to 0.70 (dl/g), and more preferably from 0.55 (dl/g) to 0.60 (dl/g).

The intrinsic viscosity [$\eta$] of the propylenic polymer is a value measured at 135°C using a decalin solvent. Specifically, the intrinsic viscosity [$\eta$] of the propylenic polymer is determined as follows.

About 20 mg of the propylenic polymer is dissolved in 15 ml of decalin, and the specific viscosity $\eta_{sp}$ of the resultant is measured in a 135°C oil bath. To this decalin solution, 5 ml of a decalin solvent is added, and the resultant is diluted, after which the specific viscosity $\eta_{sp}$ is measured in the same manner. This dilution operation is further repeated twice, and the value of $\eta_{sp}/C$ with extrapolation of the concentration (C) to 0 is determined as the intrinsic viscosity (see the following formula).

$$[\eta] = \lim(\eta_{sp}/C) \; (C\rightarrow 0)$$

The propylenic polymer may be a propylene homopolymer, or a copolymer of propylene and an $\alpha$-olefin. The amount of the $\alpha$-olefin to be copolymerized with propylene is smaller than the amount of propylene, and an $\alpha$-olefin may be used singly, or in combination of two or more kinds thereof.

The $\alpha$-olefin to be copolymerized has preferably two or more carbon atoms, more preferably two or from four to eight carbon atoms. Specific examples of such an $\alpha$-olefin include ethylene, 1-butene, 1-pentene, 1-hexene, 1-octene, and 4-methyl-1-pentene.

The propylenic polymer has a propylene content ratio of preferably 70% by mass or higher, more preferably 80% by mass or higher, still more preferably 90% by mass or higher, and the propylenic polymer is particularly preferably a propylene homopolymer.

The propylene content ratio in the propylenic polymer is preferably in the above-described range since, in a case in which the propylenic polymer contains the below-described high-molecular-weight propylenic polymer A and low-molecular-weight propylenic polymer B, an excellent compatibility is attained and the spinnability is improved, so that the average fiber diameter tends to be further reduced.

The melt flow rate (MFR: ASTM D-1238, 230°C, load: 2,160 g) of the propylenic polymer is not particularly restricted as long as the propylenic polymer can be melt-spun, and the melt flow rate is usually in a range of from 600 g/10 min to 2,500 g/10 min, and preferably in a range of from 1,200 g/10 min to 1,800 g/10 min. By using a propylenic polymer having an MFR within this range, favorable spinnability is attained, and a melt-blown nonwoven fabric having favorable mechanical strength, such as tensile strength, tends to be obtained.

The propylenic polymer which has peak tops at the respective positions of a molecular weight of 20,000 or higher and a position of a molecular weight of less than 20,000 in a discharge curve obtained by GPC may be prepared by incorporating at least one high-molecular-weight propylenic polymer A having a Mw of 20,000 or higher and at least one low-molecular-weight propylenic polymer B having a Mw of less than 20,000. In other words, the propylenic polymer may be a mixture of the high-molecular-weight propylenic polymer A and the low-molecular-weight propylenic polymer B (hereinafter, also referred to as "propylenic polymer mixture").

Alternatively, the propylenic polymer which has peak tops at the respective positions of a molecular weight of 20,000 or higher and a position of a molecular weight of less than 20,000 in a discharge curve obtained by GPC may be prepared by performing multi-step polymerization while appropriately adjusting, for example, the type of a catalyst compound and the number of polymerization steps.

<High-Molecular-Weight Propylenic Polymer A>

The high-molecular-weight propylenic polymer A has a Mw of 20,000 or higher, preferably 30,000 or higher, and more preferably 40,000 or higher.

Meanwhile, the Mw of the high-molecular-weight propylenic polymer A is preferably 80,000 or less, more preferably 70,000 or less, and still more preferably 65,000 or less.

In a case in which the Mw of the high-molecular-weight propylenic polymer A is within the above-described range, the average fiber diameter tends to be small, which is preferred.

The Mw of the high-molecular-weight propylenic polymer A is preferably from 20,000 to 80,000, more preferably from 30,000 to 70,000, and still more preferably from 40,000 to 65,000.

The high-molecular-weight propylenic polymer A may be a propylene homopolymer, or a copolymer of propylene and an $\alpha$-olefin. Examples of the $\alpha$-olefin to be copolymerized are as described above. From the standpoint of attaining an excellent compatibility with the low-molecular-weight propylenic polymer B, the high-molecular-weight propylenic polymer A has a propylene content ratio of preferably 70% by mass or higher, more preferably 80% by mass or higher, and still more preferably 90% by mass or higher, and the high-molecular-weight propylenic polymer A is particularly preferably a propylene homopolymer. An excellent compatibility leads to an improved spinnability, and the average fiber diameter thus tends to be further reduced, which is preferred.

Such a high-molecular-weight propylenic polymer A may be used singly, or in combination of two or more kinds thereof.

A density of the high-molecular-weight propylenic polymer A is not particularly restricted, and it may be, for example, from 0.870 g/cm$^3$ to 0.980 g/cm$^3$, preferably from 0.900 g/cm$^3$ to 0.980 g/cm$^3$, more preferably from 0.920 g/cm$^3$ to 0.975 g/cm$^3$, and still more preferably from 0.940 g/cm$^3$ to 0.970 g/cm$^3$.

In a case in which the density of the high-molecular-weight propylenic polymer A is 0.870 g/cm$^3$ or higher, the durability, the heat resistance, the strength, and the stability over time of the resulting melt-blown nonwoven fabric tend to be further improved. Meanwhile, in a case in which the density of the high-molecular-weight propylenic polymer A is 0.980 g/cm$^3$ or lower, the heat sealing properties and the flexibility of the resulting melt-blown nonwoven fabric tend to be further improved.

In the disclosure, the density of the propylenic polymer is a value obtained by heat-treating a strand, which is obtained in the measurement of melt flow rate (MFR) at 190°C under a load of 2.16 kg, for 1 hour at 120°C, slowly cooling the strand to room temperature (25°C) over a period of 1 hour, and then measuring the density using a density gradient tube in accordance with JIS K7112:1999.

A melt flow rate (MFR) of the high-molecular-weight propylenic polymer A is not particularly restricted as long as it can be used in combination with the below-described low-molecular-weight propylenic polymer B to produce a melt-blown nonwoven fabric. From the standpoints of the fineness of the fiber diameter, the specific surface area, the spinnability and the like, the MFR of the high-molecular-weight propylenic polymer A is preferably from 1,000 g/10 min to 2,500 g/10 min, more preferably from 1,200 g/10 min to 2,000 g/10 min, and still more preferably from 1,300 g/10 min to 1,800 g/10 min.

In the disclosure, the MFR of the propylenic polymer is a value measured in accordance with ASTM D1238 under a load of 2.16 kg at 190°C.

A content ratio of the high-molecular-weight propylenic polymer A with respect to a total mass of the propylenic polymer is preferably from 60% by mass to 92% by mass, more preferably from 62% by mass to 90% by mass, and still more preferably from 70% by mass to 88% by mass.

In a case in which the content ratio of the high-molecular-weight propylenic polymer A is within this range, the average fiber diameter tends to be small and the specific surface area tends to be large. In addition, an excellent balance of the spinnability, the fiber strength, the fine particle collection efficiency and the filtration flow rate tends to be attained.

The term "total mass of the propylenic polymer" used herein means a total mass of polymers having a propylene content ratio of 50% by mass or higher with respect to all structural units.

In a case in which a content ratio of the high-molecular-weight propylenic polymer A is lower than 70% by mass, it is preferred to design the Mw of the high-molecular-weight propylenic polymer A to be relatively high. Meanwhile, when the content ratio of the high-molecular-weight propylenic polymer A is higher than 95% by mass, it is preferred to design the Mw of the high-molecular-weight propylenic polymer A to be relatively low.

<Low-Molecular-Weight Propylenic Polymer B>

The low-molecular-weight propylenic polymer B has a relatively low molecular weight (Mw) of less than 20,000;

therefore, it may be a wax-form polymer.

The low-molecular-weight propylenic polymer B has a Mw of preferably 15,000 or less, more preferably 14,000 or less, and still more preferably 13,000 or less.

Meanwhile, the Mw of the low-molecular-weight propylenic polymer B is preferably 400 or higher, more preferably 1,000 or higher, still more preferably 2,000 or higher, and particularly preferably 6,000 or higher.

In a case in which the Mw of the low-molecular-weight propylenic polymer B is within the above-described range, fiber breakage during spinning is unlikely to occur, so that the average fiber diameter can be reduced while maintaining a high spinnability, which is preferred.

The Mw of the low-molecular-weight propylenic polymer B is preferably from 400 to less than 20,000, more preferably from 400 to 15,000, still more preferably from 1,000 to 14,000, yet still more preferably from 2,000 to 13,000, and particularly preferably from 6,000 to 13,000.

The low-molecular-weight propylenic polymer B may be a propylene homopolymer, or a copolymer of propylene and an $\alpha$-olefin. Examples of the $\alpha$-olefin to be copolymerized are as described above. From the standpoint of attaining an excellent compatibility with the high-molecular-weight propylenic polymer A, the low-molecular-weight propylenic polymer B has a propylene content ratio of preferably 70% by mass or higher, more preferably 80% by mass or higher, and still more preferably 90% by mass or higher, and the low-molecular-weight propylenic polymer B is particularly preferably a propylene homopolymer. An excellent compatibility leads to an improved spinnability, and the average fiber diameter thus tends to be further reduced.

Such a low-molecular-weight propylenic polymer B may be used singly, or in combination of two or more kinds thereof.

The low-molecular-weight propylenic polymer B has a softening point of preferably higher than 90°C, and more preferably 100°C or higher.

In a case in which the softening point of the low-molecular-weight propylenic polymer B is higher than 90°C, the thermal stability in heat treatment or use can be further enhanced, as a result of which the filter performance tends to be further improved. An upper limit of the softening point of the low-molecular-weight propylenic polymer B is not particularly restricted and may be, for example, 145°C.

In the disclosure, the softening point of the propylenic polymer is a value measured in accordance with JIS K2207:2006.

A density of the low-molecular-weight propylenic polymer B is not particularly restricted, and it may be, for example, from 0.890 g/cm$^3$ to 0.980 g/cm$^3$, preferably from 0.910 g/cm$^3$ to 0.980 g/cm$^3$, more preferably from 0.920 g/cm$^3$ to 0.980 g/cm$^3$, and still more preferably from 0.940 g/cm$^3$ to 0.980 g/cm$^3$.

In a case in which the density of the low-molecular-weight propylenic polymer B is within this range, excellent kneadability of the low-molecular-weight propylenic polymer B and the high-molecular-weight propylenic polymer A, as well as excellent spinnability and excellent stability over time tend to be attained. A method of measuring the density of the propylenic polymer is as described above.

A content ratio of the low-molecular-weight propylenic polymer B with respect to a total mass of the propylenic polymer is preferably from 8% by mass to 40% by mass, more preferably from 10% by mass to 38% by mass, and still more preferably from 12% by mass to 30% by mass.

In a case in which the content ratio of the low-molecular-weight propylenic polymer B is within this range, the average fiber diameter tends to be small and the specific surface area tends to be large. In addition, an excellent balance of the spinnability, the fiber strength, the fine particle collection efficiency and the filtration flow rate tends to be attained.

The term "total mass of the propylenic polymer" used herein means a total mass of polymers having a propylene content ratio of 50% by mass or higher with respect to all structural units.

In a case in which the content ratio of the low-molecular-weight propylenic polymer B is lower than 10% by mass, it is preferred to design the Mw of the low-molecular-weight propylenic polymer B to be relatively low. In this case, the Mw of the low-molecular-weight propylenic polymer B is preferably from 400 to 15,000, more preferably from 1,000 to 13,000, and particularly preferably from 1,000 to 8,000.

Meanwhile, in a case in which the content ratio of the low-molecular-weight propylenic polymer B is higher than 25% by mass, it is preferred to design the Mw of the low-molecular-weight propylenic polymer B to be relatively high. In this case, the Mw of the low-molecular-weight propylenic polymer B is preferably from 1,000 to 15,000, more preferably from 3,000 to 15,000, and still more preferably from 5,000 to 15,000.

<Melt-Blown Nonwoven Fabric>

The fibers constituting the melt-blown nonwoven fabric have an average fiber diameter of preferably less than 1.1 $\mu$m, more preferably from 0.3 $\mu$m to 1.0 $\mu$m, and still more preferably from 0.5 $\mu$m to 0.9 $\mu$m. By using the propylenic polymer in the present disclosures, the average fiber diameter can be further reduced.

The average fiber diameter of the melt-blown nonwoven fabric is a value obtained by arbitrarily selecting 100 nonwoven fabric fibers in an electron micrograph (magnification: × 1,000) of the melt-blown nonwoven fabric, measuring the diameters of the selected fibers, and then calculating the average of the measured values.

When the fiber diameter distribution of the melt-blown nonwoven fabric is measured, the ratio of a peak fiber diameter with respect to the average fiber diameter (this ratio is hereinafter also referred to as "peak fiber diameter ratio") is preferably higher than 0.5. In a case in which the peak fiber diameter ratio is higher than 0.5, the fiber diameter distribution is made narrower, and the fiber diameters are thus made more uniform. Accordingly, the generation of gaps caused by non-uniform fiber diameters is suppressed, so that the particle-capturing efficiency tends to be further improved.

The peak fiber diameter ratio is more preferably 0.53 or higher, and still more preferably 0.55 or higher. An upper limit value of the peak fiber diameter ratio is not particularly restricted and may be, for example, 0.95 or lower, or 0.90 or lower.

Methods of measuring the average fiber diameter and the peak fiber diameter in the fiber diameter distribution will now be described.

(1) Measurement of Average Fiber Diameter

A photograph of the melt-blown nonwoven fabric is taken under an electron microscope "S-3500N" manufactured by Hitachi, Ltd. at a magnification of ×5,000, the fiber width (diameter: $\mu$m) is randomly measured at 1,000 points, and the average fiber diameter ($\mu$m) is calculated in terms of number-average.

In order to randomize the fiber-measuring points in the melt-blown nonwoven fabric, a diagonal line is drawn from the upper left corner to the lower right corner of the thus obtained photograph, and the fiber width (diameter) is measured at those points where the diagonal line intersects with fibers. Photographs are newly taken and the measurement is performed until the number of measured points reaches 1,000.

(2) Peak Fiber Diameter (Modal Fiber Diameter)

A log-frequency distribution is prepared based on the data of the fiber diameter ($\mu$m) measured at 1,000 points in the above-described "(1) Measurement of Average Fiber Diameter".

In the log-frequency distribution, the x-axis represents the fiber diameter ($\mu$m) plotted on a base-10 logarithmic scale, and the y-axis represents the frequency in percentage. On the x-axis, a fiber diameter range of from 0.1 (= $10^{-1}$) $\mu$m to 50.1 (= $10^{1.7}$) $\mu$m is equally divided into 27 sections on the logarithmic scale, and the geometric mean of a minimum value and a maximum value along the x-axis in a divided section having a highest frequency is defined as the peak fiber diameter (modal fiber diameter).

The melt-blown nonwoven fabric has a specific surface area of preferably from 2.0 $m^2$/g to 20.0 $m^2$/g, more preferably from 3.0 $m^2$/g to 15.0 $m^2$/g, and still more preferably from 3.5 $m^2$/g to 10.0 $m^2$/g. By using the propylenic polymer in the present disclosures, the specific surface area can be further increased. The specific surface area of the melt-blown nonwoven fabric is a value determined in accordance with JIS Z8830:2013.

The use of the propylenic polymer in the present disclosures allows the melt-blown nonwoven fabric to have an average fiber diameter and a specific surface area in the above-described respective ranges, and to thereby exhibit an excellent collection efficiency when used as a filter.

The melt-blown nonwoven fabric has an average pore size of preferably 10.0 $\mu$m or smaller, more preferably 3.0 $\mu$m or smaller, and still more preferably 2.5 $\mu$m or smaller.

Meanwhile, the average pore size of the melt-blown nonwoven fabric is preferably 0.01 $\mu$m or larger, and more preferably 0.1 $\mu$m or larger. With the average pore size being 0.01 $\mu$m or larger, a pressure drop is suppressed and a flow rate tends to be maintained in a case in which the melt-blown nonwoven fabric is used as a filter.

The melt-blown nonwoven fabric has a maximum pore size of preferably 20 $\mu$m or smaller, more preferably 6.0 $\mu$m or smaller, and still more preferably 5.0 $\mu$m or smaller.

Meanwhile, the minimum pore size of the melt-blown nonwoven fabric is preferably 0.01 $\mu$m or larger, and more preferably 0.1 $\mu$m or larger.

The pore sizes (average pore size, maximum pore size, and minimum pore size) of the melt-blown nonwoven fabric can be measured by a bubble point method. Specifically, in a temperature-controlled room having a temperature of 20 $\pm$ 2°C and a humidity of 65 $\pm$ 2% in accordance with JIS Z8703:1983 (Standard Atmospheric Conditions for Testing), a test piece of the melt-blown nonwoven fabric is impregnated with a fluorinic inert liquid (e.g., trade name: FLUORINERT, manufactured by 3M Japan Ltd.), and the pore sizes are measured using a capillary flow porometer (e.g., product name: CFP-1200AE, manufactured by Porous Materials, Inc.).

A basis weight of the melt-blown nonwoven fabric can be determined as appropriate in accordance with the intended use; and it is usually from 1 g/$m^2$ to 200 g/$m^2$, and preferably in a range of from 2 g/$m^2$ to 150 g/$m^2$.

A porosity of the melt-blown nonwoven fabric is usually 40% or higher, preferably in a range of from 40% to 98%, and more preferably in a range of from 60% to 95%. In a case in which the melt-blown nonwoven fabric in the present disclosures is embossed, the porosity of the melt-blown nonwoven fabric means the porosity of those parts excluding embossed points.

In the melt-blown nonwoven fabric in the present disclosures, it is preferred that a volume occupied by those parts having a porosity of 40% or higher is not less than 90%, and it is more preferred that substantially all parts have a porosity of 40% or higher. In a case in which the melt-blown nonwoven fabric in the present disclosures is used as a filter, the melt-blown nonwoven fabric in the present disclosures is preferably not embossed at all, or not embossed in substantially all regions. In a case in which the melt-blown nonwoven fabric in the present disclosures is not embossed, a pressure drop caused by permeation of a liquid through the filter tends to be suppressed, and the filtering performance tends to be improved by a longer flow-path length of the filter. It is noted here that, in a case in which the melt-blown nonwoven fabric in the present disclosures is disposed on other nonwoven fabric, the other nonwoven fabric may be embossed.

The melt-blown nonwoven fabric has an air permeability of preferably from 3 $cm^3/cm^2/sec$ to 30 $cm^3/cm^2/sec$, more preferably from 5 $cm^3/cm^2/sec$ to 20 $cm^3/cm^2/sec$, and still more preferably from 8 $cm^3/cm^2/sec$ to 12 $cm^3/cm^2/sec$.

The melt-blown nonwoven fabric preferably contains no solvent component. The term "solvent component" used herein means an organic solvent component capable of dissolving the propylenic polymer constituting the fibers. One example of the solvent component is dimethylformamide (DMF). The phrase "no solvent component" means that an amount of the solvent component is not greater than the detection limit of a headspace gas chromatography method.

The fibers of the melt-blown nonwoven fabric preferably have entanglement points at which the fibers are self-fused together. Such self-fused entanglement points mean branched sites at which the fibers are bonded with each other by fusion of the propylenic polymer itself constituting the fibers, and are distinguished from those entanglement points that are formed by adhesion of the fibers via a binder resin. The self-fused entanglement points are formed in the process of thinning of the fibrous propylenic polymer by melt blowing. Whether or not the fibers have self-fused entanglement points can be verified by an electron micrograph.

In a case in which the fibers of the melt-blown nonwoven fabric have self-fused entanglement points, it is not necessary to use an adhesive component for adhering the fibers together. Accordingly, the melt-blown nonwoven fabric whose fibers have self-fused entanglement points is not required to contain a resin component other than the propylenic polymer constituting the fibers, and it is preferred that the melt-blown nonwoven fabric contains no such resin component.

The melt-blown nonwoven fabric may be used as a single-layer nonwoven fabric, or as a nonwoven fabric constituting at least one layer of a nonwoven fabric layered body. Examples of other layer constituting the nonwoven fabric layered body include other nonwoven fabrics, such as conventional melt-blown nonwoven fabrics, spun-bonded nonwoven fabrics, and needle-punched and spun-laced nonwoven fabrics; woven fabrics; knitted fabrics; and paper. In the nonwoven fabric layered body, the melt-blown nonwoven fabric in the present disclosures may be contained as at least one layer, or as two or more layers. Further, the nonwoven fabric layered body may contain at least one, or two or more, of the above-described other nonwoven fabrics, woven fabrics, knitted fabrics, paper and the like. The nonwoven fabric layered body can be used as a filter, and may also be used as, for example, a reinforcing material for foam molding.

<Use of Melt-Blown Nonwoven Fabric>

The melt-blown nonwoven fabric in the present disclosures may be used as, for example, a filter such as a gas filter (air filter) or a liquid filter.

In a case in which the melt-blown nonwoven fabric satisfies at least one of the following conditions 1) to 3): 1) containing no solvent component; 2) containing no adhesive component for adhering the fibers together; and 3) not being embossed, a content of impurities therein is reduced. Therefore, such a melt-blown nonwoven fabric has high cleanliness and filtering performance, and is thus suitably used as a high-performance filter.

The melt-blown nonwoven fabric in the present disclosures can be suitably used as a liquid filter.

The melt-blown nonwoven fabric in the present disclosures tends to have a small average fiber diameter and a large specific surface area. Therefore, it is preferred to use the melt-blown nonwoven fabric in the present disclosures as a liquid filter since an excellent fine particle collection efficiency is thereby attained.

The liquid filter may be composed of a single layer of the melt-blown nonwoven fabric in the present disclosures, or may be composed of a nonwoven fabric layered body including the melt-blown nonwoven fabrics in the present disclosures as two or more layers. In a case in which a nonwoven fabric layered body including the melt-blown nonwoven fabrics as two or more layers is used as a liquid filter, the two or more layers of the melt-blown nonwoven fabric may be simply disposed one on another.

Further, in accordance with the intended purpose and the liquid to be applied, the liquid filter may be a combination of the melt-blown nonwoven fabric in the present disclosures and other melt-blown nonwoven fabric(s). In addition, in order to improve the strength of the liquid filter, for example, a spun-bonded nonwoven fabric and/or a net-like material may be disposed on the liquid filter.

The liquid filter may be subjected to, for example, a calendering treatment using a pair of flat rolls having a clearance therebetween so as to control the liquid filter to have a small pore size. The clearance between the flat rolls needs to be modified as appropriate in accordance with the thickness of the nonwoven fabric such that the voids between the fibers of the nonwoven fabric are not eliminated.

In a case in which heating is performed in the calendering treatment, it is desired that thermal press bonding is performed at a roll surface temperature in a range of from 15°C to 50°C lower than the melting point of the polypropylene fibers. In a case in which the roll surface temperature is lower than the melting point of the polypropylene fibers by 15°C or more, the surface of the melt-blown nonwoven fabric is prevented from forming a film, so that a reduction in the filtering performance tends to be suppressed.

The melt-blown nonwoven fabric in the present disclosures may also be used as a reinforcing material for foam molding. The reinforcing material for foam molding is, for example, a reinforcing material that is used for covering the surface of a foam-molded article composed of urethane or the like to protect the surface of the foam-molded article or improve the rigidity of the foam-molded article.

The melt-blown nonwoven fabric in the present disclosures tends to have a small average fiber diameter and a large specific surface area and, therefore, tends to exhibit a high liquid retention performance. Accordingly, a foaming resin such as urethane can be prevented from bleeding out on the surface of the resulting molded article, by performing foam molding with a reinforcing material for foam molding, which includes the melt-blown nonwoven fabric in the present disclosures, being arranged on the inner surface of a foam molding die. As the reinforcing material for foam molding, a single-layer nonwoven fabric consisting of only the melt-blown nonwoven fabric in the present disclosures may be used; however, it is preferred to a nonwoven fabric layered body in which a spun-bonded nonwoven fabric is disposed on one or both sides of the melt-blown nonwoven fabric in the present disclosures. By disposing the spun-bonded nonwoven fabric, for example, it is made easier to dispose the melt-blown nonwoven fabric with other layers.

The spun-bonded nonwoven fabric used as the reinforcing material for foam molding has a fiber diameter of preferably from 10 $\mu$m to 40 $\mu$m, and more preferably from 10 $\mu$m to 20 $\mu$m, and a basis weight of preferably from 10 g/m$^2$ to 50 g/m$^2$, and more preferably from 10 g/m$^2$ to 20 g/m$^2$. In a case in which the fiber diameter and the basis weight of the spun-bonded nonwoven fabric layer are within the above-described respective ranges, bleeding of a foaming resin is likely to be inhibited, and a reduction in the weight of the reinforcing material for foam molding can be achieved.

As required, the reinforcing material for foam molding may further include a reinforcing layer and the like on the spun-bonded nonwoven fabric. As the reinforcing layer, various known nonwoven fabrics and the like can be used. In a case in which the reinforcing material for foam molding has a reinforcing layer only on one side, the reinforcing material for foam molding is used with the reinforcing layer being arranged closer to the foaming resin side than the melt-blown nonwoven fabric in the present disclosures.

<Method of Producing Melt-Blown Nonwoven Fabric>

A method of producing the melt-blown nonwoven fabric in the present disclosures is not particularly restricted, and any known method can be applied. For example, a production method including the following processes may be employed:

1) the process of discharging a molten propylenic polymer from a spinneret along with a heated gas to prepare a fibrous propylenic polymer in accordance with a melt-blowing method; and
2) the process of collecting the fibrous propylenic polymer in the form of a web.

The "melt-blowing method" is a fleece forming method employed in the production of melt-blown nonwoven fabrics. When a molten propylenic polymer is discharged in the form of fibers from a spinneret, not only a heated compressed gas is applied to the discharged polymer in a molten state from both sides but also the heated compressed gas is discharged along with the discharged polymer, whereby the diameter of the discharged polymer can be reduced.

In the melt-blowing method, specifically, for example, a propylenic polymer used as a raw material is melted using an extruder or the like. The thus molten propylenic polymer is subsequently introduced to a spinneret connected to the tip of the extruder, and discharged in the form of fibers from spinning nozzles of the spinneret. The thus discharged fibrous molten propylenic polymer is drawn with a high-temperature gas (e.g., air), as a result of which the fibrous molten propylenic polymer is thinned.

The discharged fibrous molten propylenic polymer is drawn with the high-temperature gas and thereby thinned to a diameter of usually 1.4 $\mu$m or less, and preferably 1.0 $\mu$m or less. Preferably, the fibrous molten propylenic polymer is thinned to a limit attainable by the high-temperature gas.

The thus thinned fibrous molten propylenic polymer may be further thinned by applying a high voltage thereto. When a high voltage is applied, the fibrous molten propylenic polymer is thinned by being pulled toward the collection side due to an attractive force of the resulting electric field. The voltage to be applied is not particularly restricted, and may be from 1 kV to 300 kV.

Alternatively, the fibrous molten propylenic polymer may be further thinned by irradiation with a heat ray. The fibrous propylenic polymer that has been thinned and reduced in fluidity can be re-melted by the irradiation with a heat ray. In addition, the irradiation with a heat ray can further reduce the melt viscosity of the fibrous propylenic polymer. Therefore, even when a propylenic polymer having a high molecular weight is used as a spinning raw material, sufficiently thinned fibers can be obtained, so that a melt-blown nonwoven fabric having a high strength can be obtained.

The term "heat ray" used herein means an electromagnetic wave having a wavelength of from 0.7 $\mu$m to 1,000 $\mu$m, and particularly a near-infrared radiation having a wavelength of from 0.7 $\mu$m to 2.5 $\mu$m. The intensity and the irradiation dose of the heat ray are not particularly restricted and may be any values as long as the fibrous molten propylenic polymer is re-melted. For example, a near-infrared lamp or near-infrared heater that has a strength of from 1 V to 200 V, and preferably from 1 V to 20V, can be used.

The fibrous molten propylenic polymer is collected in the form of a web. Generally, the fibrous molten propylenic polymer is collected and deposited on a collector. As a result, a melt-blown nonwoven fabric is produced. Examples of the collector include a porous belt and a porous drum. The collector may have an air collecting section and thereby promote the collection of the fibers.

The fibers may be collected in the form of a web on the desired substrate provided in advance on the collector. Examples of the substrate provided in advance include other nonwoven fabrics, such as melt-blown nonwoven fabrics, spun-bonded nonwoven fabrics, needle-punched and spun-laced nonwoven fabrics; woven fabrics; knitted fabrics; and paper. By this, a melt-blown nonwoven fabric layered body to be used in high-performance filters, wipers and the like can be obtained as well.

<Apparatus for Producing Melt-Blown Nonwoven Fabric>

An apparatus for producing the melt-blown nonwoven fabric in the present disclosures is not particularly restricted as long as it is capable of producing the melt-blown nonwoven fabric in the present disclosures. Examples thereof include a production apparatus including:

    1) an extruder that melts and transfers a propylenic polymer;
    2) a spinneret that discharges the molten propylenic polymer transferred from the extruder, in the form of fibers;
    3) a gas nozzle from which a high-temperature gas is sprayed to a bottom of the spinneret; and
    4) a collector that collects the fibrous molten propylenic polymer discharged from the spinneret, in the form of a web.

The extruder is not particularly restricted, and may be a uniaxial extruder or a multiaxial extruder. A solid propylenic polymer introduced thereto from a hopper is melted in a compression section.

The spinneret is arranged on the tip of the extruder. The spinneret usually includes plural spinning nozzles and, for example, the plural spinning nozzles are arranged in a row. The spinning nozzles have a diameter of preferably from 0.05 mm to 0.38 mm. The molten propylenic polymer is transferred to the spinneret by the extruder and introduced to the spinning nozzles. The molten propylenic polymer is then discharged in the form of fibers from openings of the spinning nozzles. The discharge pressure of the molten propylenic polymer is usually in a range of from 0.01 kg/cm$^2$ to 200 kg/cm$^2$, and preferably in a range of from 10 kg/cm$^2$ to 30 kg/cm$^2$. By this, the discharge rate is increased to realize mass production.

The gas nozzle sprays a high-temperature gas to bottom of the spinneret, more specifically to the vicinity of the openings of the spinning nozzles. The sprayed gas may be air. It is preferred to arrange the gas nozzle in the vicinity of the openings of the spinning nozzles and to spray a high-temperature gas to the propylenic polymer immediately after the propylenic polymer is discharged from the nozzle openings.

The velocity of the sprayed gas (gas discharge rate) is not particularly restricted, and may be from 4 Nmm$^3$/min/m to 30 Nmm$^3$/min/m. The temperature of the sprayed gas is usually in a range of from 5°C to 400°C, preferably in a range of from 250°C to 350°C. The type of the sprayed gas is also not particularly restricted, and a compressed air may be used.

The apparatus for producing the melt-blown nonwoven fabric may further include a voltage-applier for applying a voltage to the fibrous molten propylenic polymer discharged from the spinneret.

In addition, the apparatus for producing the melt-blown nonwoven fabric may further include a heat ray-irradiator for irradiating a heat ray to the fibrous molten propylenic polymer discharged from the spinneret.

The collector that collects fibers in the form of a web is not particularly restricted, and may collect the fibers on, for example, a porous belt. The mesh width of the porous belt is preferably from 5 mesh to 200 mesh. Further, an air collecting section may be arranged on the back side of the fiber-collecting surface of the porous belt so as to facilitate the collection. The distance from the collecting surface of the collector to the openings of the spinning nozzles is preferably from 3 cm to 55 cm.

The entire contents of the present disclosures by Japanese Patent Application No. 2017-184520 filed on September 26, 2017 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

EXAMPLES

The present invention will be described in more details below by way of Examples, provided that the present invention be not restricted in any way by the following Examples.
The values of the physical properties and the like in Examples and Comparative Examples were measured by the following methods.

(1) Average Fiber Diameter

For each melt-blown nonwoven fabric, a photograph was taken under an electron microscope (S-3500N, manufactured by Hitachi, Ltd.) at a magnification of $\times 1,000$. The fiber width (diameter) thereof was measured for arbitrarily selected 100 fibers (n = 100), and an average of the thus obtained measurement results was defined as the average fiber diameter.

(2) Specific Surface Area

In accordance with JIS Z8830:2013, the BET specific surface area (specific surface area determined by a BET method, $m^2/g$) of each melt-blown nonwoven fabric was measured by a pore distribution analyzer (BELSORP-max, manufactured by BEL Japan, Inc.) using physical adsorption of nitrogen gas.

(3) Peak Fiber Diameter Ratio

The average fiber diameter and the peak fiber diameter in a fiber diameter distribution were determined, and the thus determined peak fiber diameter was divided by the average fiber diameter. The average fiber diameter and the peak fiber diameter in the fiber diameter distribution were determined as follows.

(3-1) Average Fiber Diameter in Fiber Diameter Distribution

For each melt-blown nonwoven fabric, a photograph was taken under an electron microscope "S-3500N" manufactured by Hitachi, Ltd. at a magnification of $\times 5,000$, the fiber width (diameter: $\mu m$) thereof was randomly measured at 1,000 points, and the average fiber diameter ($\mu m$) was calculated in terms of number-average.
In order to randomize the fiber-measuring points in the melt-blown nonwoven fabric, a diagonal line was drawn from the upper left corner to the lower right corner of the thus obtained photograph, and the fiber width (diameter) was measured at those points where the diagonal line intersected with fibers. Photographs were newly taken and the measurement was performed until the number of measured points reached 1,000.

(3-2) Peak Fiber Diameter (Modal Fiber Diameter) in Fiber Diameter Distribution

A log-frequency distribution was prepared based on the data of the fiber diameter ($\mu m$) measured at 1,000 points in the above-described "(3-1) Average Fiber Diameter in Fiber Diameter Distribution".
In the log-frequency distribution, the x-axis represents the fiber diameter ($\mu m$) plotted on a base-10 logarithmic scale, and the y-axis represents the frequency in percentage. On the x-axis, a fiber diameter range of from 0.1 (= $10^{-1}$) $\mu m$ to 50.1 (= $10^{1.7}$) $\mu m$ was equally divided into 27 sections on the logarithmic scale, and the geometric mean of a minimum value and a maximum value along the x-axis in a divided section having a highest frequency was defined as the peak fiber diameter (modal fiber diameter).

[Example 1]

As a high-molecular-weight propylenic polymer A and a low-molecular-weight propylenic polymer B, 85 parts by mass of ACHIEVE 6936G2 (product name, manufactured by Exxon Mobil Corporation; a propylenic polymer having a weight-average molecular weight of 55,000, MFR: 1,550) and 15 parts by mass of Hi-WAX NP055 (product name, manufactured by Mitsui Chemicals, Inc.; a propylenic polymer having a weight-average molecular weight of 7,700), respectively, were mixed to obtain 100 parts by mass of a propylenic polymer mixture (1).
When the thus obtained propylenic polymer mixture (1) was measured by GPC in accordance with the above-described method, peak tops were observed at a position of a molecular weight of 55,000 and a position of a molecular weight of 8,000. The number of the peak tops was two. The weight-average molecular weight (Mw) of the propylenic polymer mixture (1) was 38,000. Further, the intrinsic viscosity [η] of the propylenic polymer mixture (1) was measured to be 0.56 (dl/g) by the above-described method.

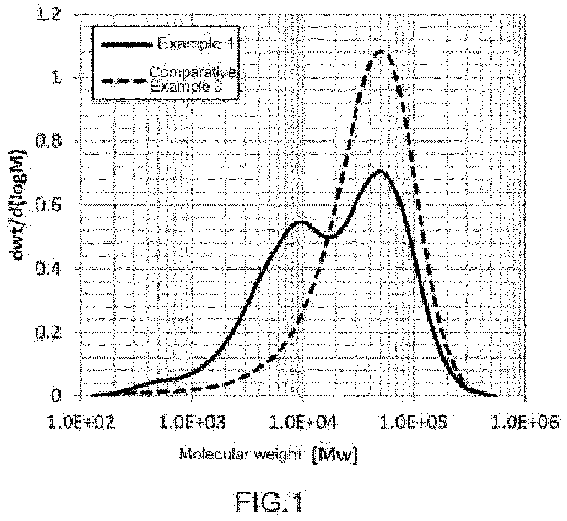

The thus obtained GPC chart of the propylenic polymer mixture (1) is shown in FIG. 1.

The propylenic polymer mixture (1) was fed to a die set at a temperature of 280°C, and discharged from the die at a rate of 50 mg/min per nozzle opening along with a heated air blown from both sides of nozzles (280°C, 120 m/sec), whereby a melt-blown nonwoven fabric was obtained. The nozzles of the die had a diameter of 0.12 mm. For the thus obtained melt-blown nonwoven fabric, the average fiber diameter, the peak fiber diameter, the peak fiber diameter ratio, and the specific surface area were determined by the above-described respective methods. The results thereof are shown in Table 1.

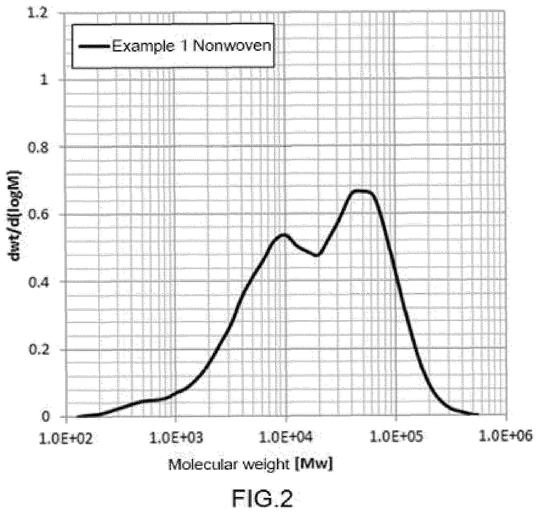

For the thus obtained melt-blown nonwoven fabric, a GPC measurement was performed by the above-described method. The thus obtained GPC chart is shown in FIG. 2. In the GPC measurement of the melt-blown nonwoven fabric, peak tops were observed at a position of a molecular weight of 55,000 and a position of a molecular weight of 8,000. The number of the peak tops was two. The weight-average molecular weight (Mw) of the melt-blown nonwoven fabric was 38,000.

Further, for the thus obtained melt-blown nonwoven fabric, the intrinsic viscosity [η] was measured by the following method.

About 20 mg of the melt-blown nonwoven fabric was dissolved in 15 ml of decalin, and the specific viscosity $\eta_{sp}$ of the resultant was measured in a 135°C oil bath. To this decalin solution, 5 ml of a decalin solvent was added, and the resultant was diluted, after which the specific viscosity $\eta_{sp}$ was measured in the same manner. This dilution operation was further repeated twice, and the value of $\eta_{sp}/C$ with extrapolation of the concentration (C) to 0 was determined as the intrinsic viscosity (see the following formula).

$$[\eta] = \lim(\eta_{sp}/C) \; (C{\rightarrow}0)$$

The intrinsic viscosity [η] of the melt-blown nonwoven fabric was 0.56 (dl/g), which was the same as the pre-spinning value.

[Example 2]

The same manner as described in Example 1 was conducted, except that 100 parts by mass of a propylenic polymer mixture (2) was used instead of 100 parts by mass of the propylenic polymer mixture (1), and the propylenic polymer mixture (2) was a mixture of 90 parts by mass of ACHIEVE 6936G2 (product name, manufactured by Exxon Mobil Corporation; a propylenic polymer having a weight-average molecular weight of 55,000, MFR: 1,550) as a high-molecular-weight propylenic polymer A, and 10 parts by mass of Hi-WAX NP055 (product name, manufactured by Mitsui Chemicals, Inc.; a propylenic polymer having a weight-average molecular weight of 7,700) as a low-molecular-weight propylenic polymer B.

When the thus obtained propylenic polymer mixture (2) was measured by GPC in accordance with the above-described method, peak tops were observed at a position of a molecular weight of 55,000 and a position of a molecular weight of 8,000. The number of the peak tops was two. The weight-average molecular weight (Mw) of the propylenic polymer mixture (2) was 53,000. Further, the intrinsic viscosity [η] of the propylenic polymer mixture (2) was measured to be 0.56 (dl/g) by the above-described method. Regarding the thus obtained melt-blown nonwoven, the average fiber diameter, the peak fiber diameter, the peak fiber diameter ratio, the specific surface area, and the intrinsic viscosity [η] are shown in Table 1.

[Comparative Example 1]

The same manner as described in Example 1 was conducted, except that 100 parts by mass of ACHIEVE 6936G2 (product name, manufactured by Exxon Mobil Corporation; a propylenic polymer having a weight-average molecular weight of 55,000, MFR: 1,550) as a high-molecular-weight propylenic polymer A was used singly instead of 100 parts by mass of the propylenic polymer mixture (1).

When ACHIEVE 6936G2 as a high-molecular-weight propylenic polymer A was measured by GPC in accordance with the above-described method, peak top was observed at only one position of a molecular weight of 55,000. The intrinsic viscosity [η] of ACHIEVE 6936G2 as a high-molecular-weight propylenic polymer A was measured to be 0.63 (dl/g) by the above-described method. Regarding the thus obtained melt-blown nonwoven, the average fiber diameter, the peak fiber diameter, the peak fiber diameter ratio, the specific surface area, and the intrinsic viscosity [η] are shown in Table 1.

[Comparative Example 2]

The same manner as described in Example 1 was conducted, except that 100 parts by mass of 650Y (product name, manufactured by POLYMIRAE CO.,LTD.; a propylenic polymer having a weight-average molecular weight of 51,000, MFR: 1,800) as a high-molecular-weight propylenic polymer A was used singly instead of 100 parts by mass of the propylenic polymer mixture (1). When 650Y as a high-molecular-weight propylenic polymer A was measured by GPC in accordance with the above-described method, peak top was observed at only one position of a molecular weight of 51,000. The intrinsic viscosity [η] of 650Y as a high-molecular-weight propylenic polymer A was measured to be 0.56 (dl/g) by the above-described method. Regarding the thus obtained melt-blown nonwoven, the average fiber diameter, the peak fiber diameter, the peak fiber diameter ratio, the specific surface area, and the intrinsic viscosity [η] are shown in Table 1.

[Comparative Example 3]

The same manner as described in Example 1 was conducted, except that 100 parts by mass of a propylenic polymer mixture (3) was used instead of 100 parts by mass of the propylenic polymer mixture (1), and the propylenic polymer mixture (3) was a mixture of 94 parts by mass of ACHIEVE 6936G2 (product name, manufactured by Exxon Mobil Corporation; a propylenic polymer having a weight-average molecular weight of 55,000, MFR: 1,550), and 6 parts by mass of Hi-WAX NP055 (product name, manufactured by Mitsui Chemicals, Inc.; a propylenic polymer having a weight-average molecular weight of 7,700).
When the thus obtained propylenic polymer mixture (3) was measured by GPC in accordance with the above-described method, peak tops were observed at only one position of a molecular weight of 55,000. The weight-average molecular weight (Mw) of the propylenic polymer mixture (3) was 54,000. Further, the intrinsic viscosity [η] of the propylenic polymer mixture (3) was measured to be 0.59 (dl/g) by the above-described method.
The thus obtained GPC chart of the propylenic polymer mixture (3) is shown in FIG. 1.
Regarding the thus obtained melt-blown nonwoven, the average fiber diameter, the peak fiber diameter, the peak fiber diameter ratio, the specific surface area, and the intrinsic viscosity [η] are shown in Table 1.

[Comparative Example 4]

The same manner as described in Example 1 was conducted, except that 100 parts by mass of a propylenic polymer mixture (4) was used instead of 100 parts by mass of the propylenic polymer mixture (1), and the propylenic polymer mixture (4) was a mixture of 50 parts by mass of ACHIEVE 6936G2 (product name, manufactured by Exxon Mobil Corporation; a propylenic polymer having a weight-average molecular weight of 55,000, MFR: 1,550), and 50 parts by mass of Hi-WAX NP055 (product name, manufactured by Mitsui Chemicals, Inc.; a propylenic polymer having a weight-average molecular weight of 7,700).
When the thus obtained propylenic polymer mixture (4) was measured by GPC in accordance with the above-described method, peak tops were observed at a position of a molecular weight of 55,000 and a position of a molecular weight of 8,000. The number of the peak tops was two. The weight-average molecular weight (Mw) of the propylenic polymer mixture (4) was 29,000. Further, the intrinsic viscosity [η] of the propylenic polymer mixture (4) was measured to be 0.41 (dl/g) by the above-described method.
When an attempt was made to produce a melt-blown nonwoven fabric using the propylenic polymer mixture (4) in the same manner as in Example 1, spinning could not be carried out.

[Comparative Example 5]

The same manner as described in Example 1 was conducted, except that 100 parts by mass of a propylenic polymer mixture (5) was used instead of 100 parts by mass of the propylenic polymer mixture (1), and the propylenic polymer mixture (5) was a mixture of 85 parts by mass of S119 (product name, manufactured by by Mitsui Chemicals, Inc.; a propylenic polymer having a weight-average molecular weight of 17,100, MFR: 60), and 15 parts by mass of Hi-WAX NP055 (product name, manufactured by Mitsui Chemicals, Inc.; a propylenic polymer having a weight-average molecular weight of 7,700).
When the thus obtained propylenic polymer mixture (5) was measured by GPC in accordance with the above-described method, peak tops were observed at a position of a molecular weight of 170,000 and a position of a molecular weight of 8,000. The number of the peak tops was two. The weight-average molecular weight (Mw) of the propylenic polymer mixture (5) was 162,000. Further, the intrinsic viscosity [η] of the propylenic polymer mixture (5) was measured to be 1.2 (dl/g) by the above-described method. Regarding the thus obtained melt-blown nonwoven, the average fiber diameter, the peak fiber diameter, the peak fiber diameter ratio, the specific surface area, and the intrinsic viscosity [η] are shown in Table 1.

[Comparative Example 6]

The same manner as described in Example 1 was conducted, except that 100 parts by mass of an ethylenic polymer mixture, which was a mixture of 85 parts by mass of SP5050P (product name, manufactured by by Prime Polymer Co., Ltd.; a ethylenic polymer having a weight-average molecular weight of 38,100, MFR: 135 measured in accordance with JIS K 7210-1:2014 under a load of 2.16 kg at 190°C), and 15 parts by mass of Hi-WAX 720P (product name, manufactured by Mitsui Chemicals, Inc.; a ethylenic polymer having a weight-average molecular weight of 7,000), was used instead of 100 parts by mass of the propylenic polymer mixture (1).

When the thus obtained ethylenic polymer mixture was measured by GPC in accordance with the above-described method, no peak tops derived from a propylenic polymer was observed. Peak tops derived from an ethylenic polymer were observed at a position of a molecular weight of 38,000 and a position of a molecular weight of 7,000. The weight-average molecular weight (Mw) of the ethylenic polymer mixture was 31,000. Further, the intrinsic viscosity [η] of the ethylenic polymer mixture was measured to be 0.61 (dl/g) by the above-described method. Regarding the thus obtained melt-blown nonwoven, the average fiber diameter, the peak fiber diameter, the peak fiber diameter ratio, the specific surface area, and the intrinsic viscosity [η] are shown in Table 1.

[Comparative Example 7]

A propylenic polymer mixture (6) was obtained by mixing 40 parts by mass of Vistamaxx™6202 (product name, manufactured by by Exxon Mobil Corporation; a propylene-ethylene copolymer having a weight-average molecular weight of 70,000, MFR: 20 g/10min (under a load of 2.16 kg at 230°C), ethylene content ratio of 15% by mass), 40 parts by mass of propylenic polymer wax (density: 0.900 g/cm$^3$; weight-average molecular weight: 7,800, softening point: 148°C, and ethylene content ratio: 1.7% by mass), and 20 parts by mass of propylene homopolymer having a MFR of 1500 g/10min, and a weight-average molecular weight of 54,000.

When the thus obtained propylenic polymer mixture (6) was measured by GPC in accordance with the above-described method, peak tops were observed at a position of a molecular weight of 70,000, a position of a molecular weight of 54,000 and a position of a molecular weight of 8,000. The number of the peak tops was three. The weight-average molecular weight (Mw) of the propylenic polymer mixture (6) was 48,000. Further, the intrinsic viscosity [η] of the propylenic polymer mixture (6) was measured to be 1.3 (dl/g) by the above-described method. A melt-blown nonwoven was obtained by the same manner as described in Example 1, except that the propylenic polymer mixture (6) was used.

Regarding the thus obtained melt-blown nonwoven, the average fiber diameter, the peak fiber diameter, the peak fiber diameter ratio, the specific surface area, and the intrinsic viscosity [η] are shown in Table 1.

[Table 1]

| | | Example 1 | Example 2 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| High-molecular-weight propylenic polymer A | Type | PP | PP | PP | PP | PP | PP | PP | PE | PP |
| | Mw | 55000 | 55000 | 55000 | 51000 | 55000 | 55000 | 171000 | 38000 | 54000 |
| | Amount (parts by mass) | 85 | 90 | 100 | 100 | 94 | 50 | 85 | 85 | 20 |
| Low-molecular-weight propylenic polymer B | Type | PP | PP | - | - | PP | PP | PP | PE | PP |
| | Mw | 7700 | 7700 | | | 7700 | 7700 | 7700 | 7000 | 7800 |
| | Amount (parts by mass) | 15 | 10 | | | 6 | 50 | 15 | 15 | 40 |
| Copolymer C | Type | - | - | - | - | - | - | - | - | PP-PE |
| | Mw | | | | | | | | | 70000 |
| | Amount (parts by mass) | | | | | | | | | 40 |
| Mixture of polymers | Mw | 38000 | 53000 | 55000 | 51000 | 54000 | 29000 | 162000 | 31000 | 48000 |
| | Intrinsic viscosity $[\eta]$ (dl/g) | 0.56 | 0.56 | 0.63 | 0.56 | 0.59 | 0.41 | 1.2 | 0.61 | 1.3 |
| | Number of peak of PP | 2 | 2 | 1 | 1 | 1 | 2 | 2 | 0 | 3 |

EP 3 674 463 A1

16

| | | Example 1 | Example 2 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Nonwoven fabric | Intrinsic viscosity [$\eta$] (dl/g) | 0.56 | 0.56 | 0.63 | 0.56 | 0.59 | 0.41 | 1.2 | 0.61 | 1.3 |
| | Average fiber diameter ($\mu$m) | 0.90 | 0.99 | 1.34 | 1.11 | 1.10 | NG in spinning | 3.10 | 3.80 | 2.80 |
| | Peak fiber diameter | 0.50 | 0.52 | 0.72 | 0.50 | 0.59 | NG in spinning | 2.21 | 2.53 | 1.2 |
| | Peak fiber diameter ratio | 0.56 | 0.53 | 0.54 | 0.45 | 0.53 | NG in spinning | 0.71 | 0.67 | 0.4 |
| | Specific surface area (m$^2$/g) | 3.8 | 3.4 | 2.8 | 2.9 | 2.9 | NG in spinning | 1.8 | 1.2 | 0.6 |

EP 3 674 463 A1

In Table 1, "-" means that the pertinent component is not added. PP is represented by propylenic polymer, and PE is represented by ethylenic polymer.

As apparent from Table 1, the melt-blown nonwoven fabrics of Examples had a smaller average fiber diameter and a larger specific surface area than the melt-blown nonwoven fabrics of Comparative Examples. Therefore, it is seen that the melt-blown nonwoven fabrics of Examples each have an excellent fine particle collection efficiency when used as a filter.

**Claims**

1. A melt-blown nonwoven fabric, comprising a propylenic polymer that shows at least one peak top at a position of a molecular weight of 20,000 or higher and at least one peak top at a position of a molecular weight of less than 20,000 in a discharge curve obtained by gel permeation chromatography, and that has an intrinsic viscosity [η] of from 0.50 (dl/g) to 0.75 (dl/g).

2. The melt-blown nonwoven fabric according to claim 1, wherein the propylenic polymer comprises: a high-molecular-weight propylenic polymer A having a weight-average molecular weight of 20,000 or higher; and a low-molecular-weight propylenic polymer B having a weight-average molecular weight of less than 20,000.

3. The melt-blown nonwoven fabric according to claim 2, wherein a content ratio of the low-molecular-weight propylenic polymer B with respect to a total mass of the propylenic polymer is from 8% by mass to 40% by mass.

4. The melt-blown nonwoven fabric according to claim 2 or 3, wherein a content ratio of the high-molecular-weight propylenic polymer A with respect to the total mass of the propylenic polymer is from 60% by mass to 92% by mass.

5. The melt-blown nonwoven fabric according to any one of claims 2 to 4, wherein the high-molecular-weight propylenic polymer A has a melt flow rate (MFR) of from 1,000 g/10 min to 2,500 g/10 min.

6. The melt-blown nonwoven fabric according to any one of claims 1 to 5, wherein the propylenic polymer has a weight-average molecular weight of 20,000 or higher.

7. The melt-blown nonwoven fabric according to any one of claims 1 to 6, comprising fibers having an average fiber diameter of less than 1.1 μm.

8. The melt-blown nonwoven fabric according to any one of claims 1 to 7, having a specific surface area of from 2.0 m²/g to 20.0 m²/g.

9. The melt-blown nonwoven fabric according to any one of claims 1 to 8, wherein a ratio of a peak fiber diameter with respect to an average fiber diameter is higher than 0.5.

10. A nonwoven fabric layered body comprising at least the melt-blown nonwoven fabric according to any one of claims 1 to 9.

11. A filter comprising the melt-blown nonwoven fabric according to any one of claims 1 to 9.

12. The filter according to claim 11, which is a filter for liquids.

FIG.1

FIG.2

## INTERNATIONAL SEARCH REPORT

| International application No. |
| --- |
| PCT/JP2018/035740 |

### A. CLASSIFICATION OF SUBJECT MATTER
Int.Cl. D04H3/16(2006.01)i, B01D39/16(2006.01)i, D04H3/007(2012.01)i

According to International Patent Classification (IPC) or to both national classification and IPC

### B. FIELDS SEARCHED

Minimum documentation searched (classification system followed by classification symbols)
Int.Cl. D04H1/00-18/04, B01D39/00-41/04

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus/JMEDPlus/JST7580 (JDreamIII), CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X<br>A | WO 2017/142021 A1 (MITSUI CHEMICALS, INC.) 24 August 2017, claims, paragraphs [0030]-[0043], [0056], [0068]-[0071], examples & TW 201800637 A | 1-8, 10-12<br>9 |

☒ Further documents are listed in the continuation of Box C. ☐ See patent family annex.

| | | |
| --- | --- | --- |
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
| --- | --- |
| 13 December 2018 (13.12.2018) | 25 December 2018 (25.12.2018) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/035740 |

C (Continuation).  DOCUMENTS CONSIDERED TO BE RELEVANT

| Category* | Citation of document, with indication, where appropriate, of the relevant passages | Relevant to claim No. |
|---|---|---|
| A | Achieve™6936G2 Polypropylene Homopolymer, ExxonMobil Chemical [online], 2016, Internet : <URL:http://exxonmobilchemical.ides.com/en-us/ds243611/achieve™6936g2.aspx?i=82928&u=0> (confirmed to be announced in 2016 from WayBackMachine(https://archive.org/).) | 1-12 |
| A | JP 2017-115289 A (PANASONIC IP MANAGEMENT CO., LTD.) 29 June 2017, entire text & US 2018/0105955 A1, whole document & EP 3396039 A1 | 1-12 |
| A | WO 2016/148174 A1 (TORAY FINE CHEMICALS CO., LTD.) 22 September 2016, examples & US 2018/0066386 A1, examples & EP 3272922 A1 | 1-12 |
| A | JP 2011-195988 A (JAPAN POLYPROPYLENE CORPORATION) 06 October 2011, entire text (Family: none) | 1-12 |
| A | JP 2009-525375 A (BASELL POLYOLEFINE GMBH) 09 July 2009, entire text & US 2009/0017710 A1, whole document & WO 2007/088204 A2 & EP 1979384 A2 | 1-12 |
| P, A | JP 2017-197890 A (MITSUI CHEMICALS, INC.) 02 November 2017, entire text (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200022219 A
- WO 2015093451 A
- WO 2012111724 A
- WO 2012014501 A
- WO 2012102398 A
- JP 2017184520 A